# EUROPÄISCHE PATENTANMELDUNG

(11) **EP 4 706 370 A1**
(43) Veröffentlichungstag der Anmeldung: **11.03.2026**
(21) Anmeldenummer: 25201034.3
(22) Anmeldetag: 09.09.2025
(51) Int. Cl.: A01D 57/20, A01B 73/06, A01D 84/00, A01D 89/00

(54) **LANDWIRTSCHAFTLICHE ERNTEMASCHINE**

(30) Priorität: 10.09.2024 DE 102024126015
(71) Anmelder: CLAAS Saulgau GmbH, 88348 Bad Saulgau (DE)
(72) Erfinder: Birkhofer, Stefan, 78333 Stockach (DE); Sauter, Stefan, 88529 Zwiefalten (DE)

(57) **Zusammenfassung**

Landwirtschaftliche Erntemaschine (10), mit einem Rahmen (11), welches einen ersten Abschnitt (11a), an welchem ein Fahrwerk (16) angreift, und einen zweiten Abschnitt (11b), an welchem eine Deichsel (13) angreift, aufweist, wobei die beiden Abschnitte (11a, 11b) mit Hilfe eines Knickzylinders (26) um eine sich in Querrichtung erstreckende Knickachse (27) relativ zueinander verlagerbar sind, mit Auslegern (19), wobei zu beiden Seiten des Rahmens (11) jeweils mindestens ein Ausleger (19) am ersten Abschnitt (11a) des Rahmens derart angreift, dass zur Überführung der Erntemaschine (10) zwischen einer Arbeitsstellung und einer Transportstellung der jeweilige Ausleger (19) relativ zum ersten Abschnitt (11a) des Rahmens (11) verlagerbar ist, mit Arbeitseinheiten (20), wobei an jedem der Ausleger (19) jeweils mindestens eine Arbeitseinheit angreift, die zusammen mit dem jeweiligen Ausleger (19) verlagerbar sind, wobei die sich in Querrichtung der Erntemaschine erstreckende Knickachse (27), um welche der erste Abschnitt (11a) und der zweite Abschnitt (11b) des Rahmens bei der Überführung der Erntemaschine zwischen der Arbeitsstellung und einer Vorgewendestellung durch Betätigen des Knickzylinders (26) relativ zueinander verlagerbar sind, in Zugrichtung der Erntemaschine gesehen derart angeordnet oder positioniert ist, dass in dieser Vorgewendestellung die Arbeitseinheiten (20) in Zugrichtung der Erntemaschine gesehen von hinten nach vorne schräg ansteigend verlaufen. Fig. 1

## Beschreibung

Die Erfindung betrifft eine landwirtschaftliche Erntemaschine.

Aus der Praxis sind landwirtschaftliche Erntemaschinen bekannt, die an ein Zugfahrzeug angekoppelt werden können, um mithilfe des Zugfahrzeugs ziehend, also durch das Zugfahrzeug gezogen, fortbewegt werden können. Bei solchen ziehend durch ein Zugfahrzeug fortbewegten landwirtschaftlichen Erntemaschinen handelt es sich insbesondere um Futtererntemaschinen, wie zum Beispiel Schwader oder Wender.

DE 10 2020 106 804 A1 offenbart eine als Merger bzw. Pickup-Band-Schwader ausgebildete Futtererntemaschine. Die dort offenbarte Futtererntemaschine verfügt über ein Gestell bzw. einen Rahmen, der in zwei Abschnitte geteilt ist, wobei an einem ersten Abschnitt ein Fahrwerk und an einem zweiten Abschnitt eine Deichsel angreift. Die beiden Abschnitte sind mithilfe eines Knickzylinders relativ zueinander verlagerbar, nämlich zwischen einer Arbeitsstellung und einer Vorgewendestellung. Am zweiten Abschnitt des Rahmens oder Gestells, an welchem die Deichsel angreift, greifen ferner Ausleger und an den Auslegern Arbeitseinheiten an. In der Arbeitsstellung und Vorgewendestellung erstrecken sich die Arbeitseinheiten in Querrichtung der Erntemaschine. In der Transportstellung erstrecken sich die Arbeitseinheiten in Längsrichtung der Erntemaschine.

Wird die landwirtschaftliche Erntemaschine der DE 10 2020 106 804 A1 ausgehend von der Arbeitsstellung in die Vorgewendestellung überführt, so werden die Ausleger und die an den Auslegern angreifenden Arbeitseinheiten gegenüber der Arbeitsstellung parallel verlagert und angehoben. In der Arbeitsstellung und in der Vorgewendestellung erstrecken sich die Arbeitseinheiten jeweils in horizontaler Richtung.

Es besteht Bedarf an einer landwirtschaftlichen Erntemaschine, die vorteilhaft zwischen der Arbeitsstellung und der Vorgewendestellung überführt werden kann. Aufgabe der Erfindung ist es, eine entsprechende landwirtschaftliche Erntemaschine zu schaffen. Diese Aufgabe wird durch eine landwirtschaftliche Erntemaschine nach Anspruch 1 gelöst.

Die erfindungsgemäße landwirtschaftliche Erntemaschine weist einen Rahmen oder ein Gestell auf, welches einen ersten Abschnitt, an welchem ein eine Fahrwerkachse aufweisendes Fahrwerk angreift, und einen zweiten Abschnitt, an welchem eine Deichsel angreift, aufweist, wobei die beiden Abschnitte des Rahmens oder Gestells mit Hilfe eines Knickzylinders um eine sich in Querrichtung der Erntemaschine erstreckende Knickachse relativ zueinander verlagerbar sind.

Die erfindungsgemäße landwirtschaftliche Erntemaschine weist ferner Ausleger auf, wobei zu beiden Seiten des Rahmens oder Gestells jeweils mindestens ein Ausleger am ersten Abschnitt des Rahmens oder Gestells, an welchem das Fahrwerk angreift, derart angreift, dass zur Überführung der Erntemaschine zwischen einer Arbeitsstellung, in welcher sich der jeweilige Ausleger in Querrichtung der Erntemaschine erstreckt, und einer Transportstellung, in welcher sich der jeweilige Ausleger in Zugrichtung oder Längsrichtung der Erntemaschine erstreckt, der jeweilige Ausleger relativ zum ersten Abschnitt des Rahmens oder Gestells verlagerbar ist.

Die erfindungsgemäße landwirtschaftliche Erntemaschine weist Arbeitseinheiten auf, wobei an jedem der Ausleger jeweils mindestens eine Arbeitseinheit angreift, die zusammen mit dem jeweiligen Ausleger verlagerbar sind.

Bei der erfindungsgemäßen landwirtschaftlichen Erntemaschine ist die sich in Querrichtung der Erntemaschine erstreckende Knickachse, um welche der erste Abschnitt und der zweite Abschnitt des Rahmens oder Gestells bei der Überführung der Erntemaschine zwischen der Arbeitsstellung und einer Vorgewendestellung, in welcher sich der jeweilige Ausleger ebenfalls in Querrichtung der Erntemaschine erstreckt, durch Betätigen des Knickzylinders relativ zueinander verlagerbar sind, in Zugrichtung oder Längsrichtung der Erntemaschine gesehen derart angeordnet oder positioniert, dass in dieser Vorgewendestellung die Arbeitseinheiten in Zugrichtung oder Längsrichtung der Erntemaschine gesehen von hinten nach vorne schräg ansteigend verlaufen.

Bei der erfindungsgemäßen Erntemaschine greifen die Ausleger und über die Ausleger die Arbeitseinheiten nicht am zweiten Abschnitt des Rahmens oder Gestells, an welchem die Deichsel angreift, sondern am ersten Abschnitt des Rahmens oder Gestells, an welchem das Fahrwerk angreift, an. Hierdurch wird gewährleistet, dass in dieser Vorgewendestellung die Arbeitseinheiten in Zugrichtung oder Längsrichtung der Erntemaschine gesehen von hinten nach vorne schräg ansteigend verlaufen, also nicht wie im Stand der Technik lediglich über eine Parallelverschiebung gegenüber der Arbeitsstellung vom Untergrund abgehoben werden, sondern gegenüber der horizontalen Richtung schräggestellt sind und zwar in Zugrichtung oder Längsrichtung gesehen von hinten nach vorne ansteigend. Hierdurch können die Arbeitseinheiten bei der Überführung der Erntemaschine von der Arbeitsstellung in diese Vorgewendestellung schonend von einem zu bearbeitenden Untergrund abgehoben werden. Bei der entgegengesetzten Überführung ausgehend von dieser Vorgewendestellung in die Arbeitsstellung können die Arbeitseinheiten schonend auf dem Untergrund abgesetzt werden. Die Überführung der landwirtschaftlichen Erntemaschine zwischen der Arbeitsstellung und dieser Vorgewendestellung derselben erfolgt lediglich durch Betätigen des Knickzylinders, sodass die Überführung einfach und zuverlässig durchgeführt werden kann.

Vorzugsweise ist der Knickzylinder in der Arbeitsstellung der Erntemaschine eingefahren und in dieser Vorgewendestellung der Erntemaschine ausgefahren. Dies ist für eine Überführung der Erntemaschine zwischen der Arbeitsstellung und der Transportstellung bevorzugt.

Vorzugsweise ist der Knickzylinder eingerichtet, die beiden Abschnitte des Rahmens oder Gestells auch für eine Bodenanpassung und/oder Bodenentlastung der Arbeitseinheiten in der Arbeitsstellung der Erntemaschine relativ zueinander zu verlagern. Dies erlaubt eine verbesserte Bodenanpassung und Bodenentlastung sowie eine vorteilhaft einfache Anpassung der Erntemaschine an unterschiedliche Einsatzverhältnisse.

Vorzugsweise ist die Fahrwerkachse lenkbar. Über die definierte Stellung der Arbeitseinheiten in dieser Vorgewendestellung der Erntemaschine, in welcher die Arbeitseinheiten in Zugrichtung oder Längsrichtung der Erntemaschine gesehen von hinten nach vorne schräg ansteigend verlaufen, wird ein vorteilhafter Nachlauf an der Lenkachse erzeugt, der bei Betätigung der Lenkung eine kurvenäußere Seite des Fahrwerks, der durch die Massenträgheit eher Richtung zu bearbeitendem Untergrund tendiert, vom zu bearbeitenden Untergrund leicht abheben kann.

Vorzugsweise ist die landwirtschaftliche Erntemaschine eine Futtererntemaschine, insbesondere ein Merger oder Pickup-Band-Schwader, wobei an jedem der Ausleger als Arbeitseinheit eine Pickup und ein Bandfördersegment angreift. Die Erfindung kommt vorzugsweise bei einem Merger zum Einsatz.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, anhand der Zeichnung näher erläutert. Dabei zeigt:
- Fig. 1: eine Seitenansicht einer erfindungsgemäßen landwirtschaftliche Erntemaschine in Arbeitsstellung derselben;
- Fig. 2: eine Seitenansicht der erfindungsgemäßen landwirtschaftliche Erntemaschine in einer Vorgewendestellung derselben.

Die Erfindung betrifft eine landwirtschaftliche Erntemaschine 10. Bei der landwirtschaftlichen Erntemaschine 10 handelt es sich insbesondere um eine Futtererntemaschine, die zur ziehenden Fortbewegung durch ein Zugfahrzeug an ein Zugfahrzeug (nicht gezeigt) angekoppelt werden kann. Bei der in den Figuren gezeigten Erntemaschine 10 handelt es sich um einen Merger, der auch als Pickup-Band-Schwader bezeichnet wird.

Die landwirtschaftliche Erntemaschine 10 weist ein Gestell oder einen Rahmen auf, wobei das Gestell bzw. der Rahmen 11 in zwei Abschnitte 11a, 11b unterteilt ist. Der Abschnitt 11b des Rahmens oder Gestells weist einen Längsträger 12 auf, der sich in Längsrichtung oder Zugrichtung der landwirtschaftlichen Erntemaschine 10 erstreckt. Am Längsträger 12 greift eine Deichsel 13 an, die der Ankopplung der landwirtschaftlichen Erntemaschine 10 über einen Ankoppelbock 14 an das Zugfahrzeug dient.

Dann, wenn die Erntemaschine 10 an das Zugfahrzeug angekoppelt ist, ist eine Relativbewegung zwischen der Deichsel 13 und dem Ankoppelbock 14 um eine sich in vertikaler Hochrichtung der landwirtschaftlichen Erntemaschine 10 erstreckende Achse 15 möglich.

Ferner ist eine Relativbewegung zwischen dem Ankoppelbock 14 und dem Zugfahrzeug um eine sich in horizontaler Querrichtung erstreckende Achse möglich.

An dem Abschnitt 11a des Rahmens oder Gestells greift ein Fahrwerk 16 mit Rädern 17 an. Die Räder 17 sind um eine Fahrwerksachse 18 drehbar. Beim ziehenden Fortbewegen der landwirtschaftlichen Erntemaschine 10 mithilfe eines Zugfahrzeugs stützen sich die Räder 17 des Fahrwerks 16 auf einem Untergrund ab und rotieren um die Fahrwerkachse 18.

Die landwirtschaftliche Erntemaschine 10 verfügt weiterhin über Ausleger 19. Zu beiden Seiten des Rahmens oder Gestells 11, nämlich zu beiden Seiten des Abschnitts 11a des Rahmens oder Gestells 11, an welchem das Fahrwerk 16 angreift, greift jeweils mindestens ein Ausleger 19 an, nämlich derart, dass zur Überführung der Erntemaschine 10 zwischen einer Arbeitsstellung, in welcher sich der jeweilige Ausleger 19 in Querrichtung der Erntemaschine 10 erstreckt, und einer Transportstellung, in welcher sich der jeweilige Ausleger 19 in Zugrichtung oder Längsrichtung der Erntemaschine 10 erstreckt, der jeweilige Ausleger 19 relativ zum Abschnitt 11a des Rahmens oder Gestells 11 verlagerbar ist.

Die landwirtschaftliche Erntemaschine 10 verfügt weiterhin über Arbeitseinheiten 20. An jedem Ausleger 19 greift jeweils mindestens eine Arbeitseinheit 20 an, die zusammen mit dem jeweiligen Ausleger 19 verlagerbar ist, nämlich bei der Überführung der Erntemaschine 10 zwischen der Arbeitsstellung und der Transportstellung und bei der Überführung der Erntemaschine 10 zwischen der Arbeitsstellung und einer Vorgewendestellung.

Im gezeigten Ausführungsbeispiel, in welchem die landwirtschaftliche Erntemaschine 10 als Merger ausgebildet ist, weist jede Arbeitseinheit 20 eine Pickup 21 und ein Bandfördersegment 20 auf. Ferner zeigen die Figuren Rollenniederhalter 23, die in Zugrichtung oder Längsrichtung der Erntemaschine gesehen, vor der jeweiligen Pickup 21 angeordnet sind, sowie eine Abdeckung 24, die in Fortbewegungsrichtung der landwirtschaftlichen Erntemaschine 10 gesehen hinter den Bandfördersegmenten 22 positioniert ist.

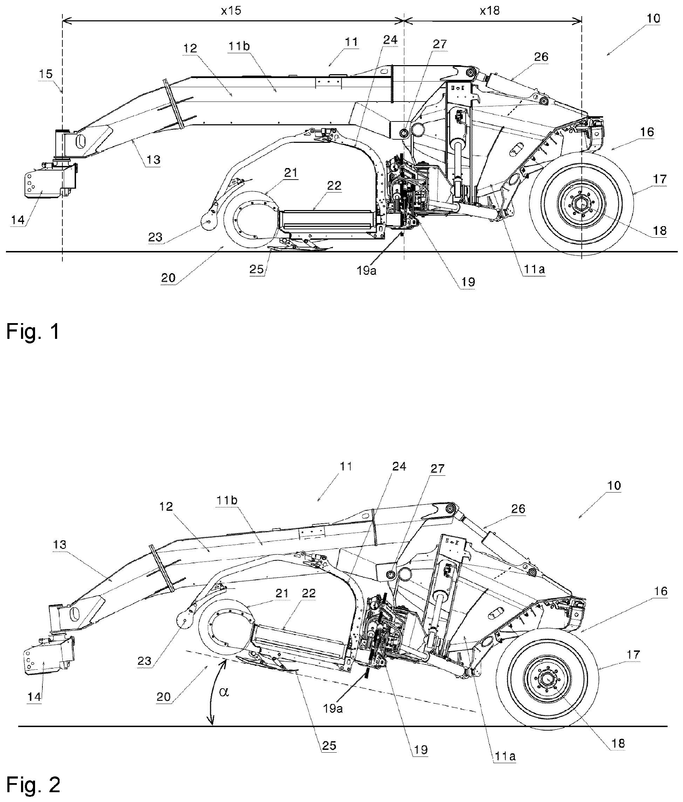

Gemäß Fig. 1, welche die landwirtschaftliche Erntemaschine 10 in der Arbeitsstellung zeigt, stützen sich die Arbeitseinheiten 20 in der Arbeitsstellung über Kufen 25 auf einem zu bearbeitenden Untergrund ab.

Wie bereits ausgeführt, weist der Rahmen oder das Gestell 11 die beiden Abschnitte 11a, 11b auf, wobei am Abschnitt 11a das Fahrwerk 16 sowie zusammen mit dem Ausleger 19 die Arbeitseinheiten 20 angreifen, und wobei am Abschnitt 11b die Deichsel 13 angreift. Diese beiden Abschnitte 11a, 11b des Rahmens oder Gestells 11 der landwirtschaftlichen Erntemaschine 10 sind mithilfe eines Knickzylinders 26 um eine sich in Querrichtung der Erntemaschine erstreckende Achse 27 relativ zueinander verlagerbar, nämlich bei der Überführung der Erntemaschine 10 zwischen der in Fig. 1 gezeigten Arbeitsstellung und der in Fig. 2 gezeigten Vorgewendestellung, in welcher sich die Arbeitseinheiten 20 jeweils in Querrichtung der landwirtschaftlichen Erntemaschine 10 erstrecken.

Die Achse 27, um welche die beiden Abschnitte 11a, 11b mithilfe des Knickzylinders 26 bei der Überführung der landwirtschaftlichen Erntemaschine 10 zwischen der Arbeitsstellung der Fig. 1 und der Vorgewendestellung der Fig. 2 relativ zueinander verlagerbar sind, ist bei diesem Ausführungsbeispiel in Zugrichtung oder Längsrichtung der Erntemaschine gesehen vor den Ausleger 19 bzw. auf den Ausleger 19 positioniert, nämlich im Ausführungsbeispiel der Fig. 1 etwa über einer Mittelebene 19a der Ausleger 19. So wird sichergestellt, dass in der Vorgewendestellung der Erntemaschine 10 - gemäß Fig. 2 - die Arbeitseinheiten 20 in Zugrichtung oder Längsrichtung der Erntemaschine 10 gesehen von hinten nach vorne schräg ansteigend verlaufen, also nicht parallel zu der Orientierung der Arbeitseinheiten 20 in der Arbeitsstellung der Erntemaschine 10 (siehe Fig. 1), sondern vielmehr geneigt zu dieser Ausrichtung in der Arbeitsstellung.

Bei der Überführung der landwirtschaftlichen Erntemaschine 10 ausgehend von der Arbeitsstellung der Fig. 1 in die Vorgewendestellung der Fig. 2 können so die Arbeitseinheiten 20 schonend vom zu bearbeitenden Untergrund abgehoben werden. Ferner können bei der Überführung der Erntemaschine 10 von der in Fig. 2 gezeigten Vorgewendestellung in die in Fig. 1 gezeigte Arbeitsstellung die Arbeitseinheiten 20 schonend auf dem zu bearbeitenden Untergrund abgesetzt werden.

Diese Überführung der Erntemaschine 10 zwischen der Arbeitsstellung und der Vorgewendestellung nach Fig. 2 erfolgt demnach ausschließlich unter Beteiligung des Knickzylinders 26. Gemäß Fig. 1 ist dabei der Knickzylinder 26 in der Arbeitsstellung eingefahren und gemäß Fig. 2 in der Vorgewendestellung ausgefahren.

In der Vorgewendestellung der Fig. 2 liegt die Drehachse 18 des Fahrwerks 16 näher beim Ankoppelbock 14, sodass in dieser Vorgewendestellung der Abstand zum Zugfahrzeug reduziert ist und demnach die Wendigkeit des Zuggespanns erhöht ist.

Zusätzlich zur Vorgewendestellung nach Fig. 2 können weitere Aktoren betätigt werden, um die Arbeitseinheiten weiter vom Boden abzuheben. Als Aktoren können hierfür beispielsweise die Aktoren zum Anheben der Hauptausleger oder Aktoren, die zur Gewichtsentlastung der Ausleger dienen, vorgesehen werden. Dadurch ergibt sich eine weitere Vorgewendestellung, die sich aus einer Überlagerung der Vorgewendestellung gemäß Fig. 2 und dem Anheben der Ausleger 19 zusammensetzt.

Die Fahrwerksachse 18 ist vorzugsweise lenkbar. Bei der Überführung der Erntemaschine 10 in die Vorgewendestellung wird ein Nachlauf an einer Lenkachse 18 erzeugt, der bei Betätigung der Lenkung eine kurvenäußere Seite leicht anhebt. Dies ist von Vorteil, da die kurvenäußere Seite durch die Massenträgheit eher Richtung Boden gezogen wird. Das Abheben vom Untergrund ist daher von Vorteil, um eine Kollision mit dem Untergrund auszuschließen.

Im gezeigten Ausführungsbeispiel ist die Achse 27, um die mithilfe des Knickzylinders 26 die beiden Abschnitte 11a, 11b des Fahrwerks oder Gestells 11 relativ zueinander klappbar sind, in Zugrichtung oder Längsrichtung der Erntemaschine 10 gesehen etwa über der Mittelebene 19a der Ausleger 19 positioniert. Dieselbe kann auch vor den Auslegern 19 positioniert sein, insbesondere in Zugrichtung oder Längsrichtung der Erntemaschine 10 gesehen vor Gelenkstellen zwischen dem Abschnitt 11a des Rahmens oder Gestells und den Auslegern 19. So sind die Ausleger 19 am Abschnitt 11a des Rahmens oder Gestells 11 angelenkt, um die Ausleger 19 gegenüber dem Abschnitt 11a des Rahmens oder Gestells zwischen der Arbeitsstellung und der Transportstellung zu überführen.

Die sich in Querrichtung erstreckende Achse 27, um welche die beiden Abschnitte 11a, 11b des Rahmens oder Gestells 11 mithilfe des Knickzylinders 26 zueinander schwenkbar oder knickbar sind, kann in der Mitte oder in etwa in der Mitte zwischen der Schenkachse 15 zwischen der Deichsel 13 und dem Ankoppelbock 14 und der Fahrwerksachse 18 angeordnet sein. Dann, wenn die Achse 27 in etwa in der Mitte zwischen der Schwenkachse 15 zwischen Deichsel 13 und Ankoppelbock 14 und der Fahrwerksachse 18 angeordnet ist, ist ein Abstand x15 der Achse 27 von der Schwenkachse 15 zwischen Deichsel 13 und Ankoppelbock 14 etwa so groß wie ein Abstand x18 der Achse 27 von der Fahrwerksachse 18.

Gemäß der Erfindung kann die Achse 27 in Zugrichtung oder Längsrichtung der Erntemaschine 10 gesehen so angeordnet werden, dass das Verhältnis x15:x18 etwa zwischen 50:50 und 75:25 liegt.

Besonders bevorzugt ist es jedoch, die Achse 27 in Zugrichtung oder Längsrichtung der Erntemaschine 10 gesehen so anzuordnen, dass die Achse 27 etwa über der Mittelebene 19a der Ausleger 19 positioniert ist. D.h. ein Lot, welches in der Arbeitsstellung der Erntemaschine 10 durch die Achse 27 gelegt wird, fällt etwa mit der Mittelebene 19a des Auslegers 19 zusammen.

Der Knickzylinder 26 kann eingerichtet sein, die beiden Abschnitte 11a, 11b des Rahmens oder Gestells 11 auch für eine Bodenanpassung und/oder Bodenentlastung der Arbeitseinheiten 20 in der Arbeitsstellung der Erntemaschine relativ zueinander zu verlagern. Dies kann im Wege einer stetigen oder kontinuierlichen Regelung des Knickzylinders 26 erfolgen. Bei der erfindungsgemäßen landwirtschaftlichen Erntemaschine 10 wird demnach lediglich der Knickzylinder 26 für die Überführung der landwirtschaftlichen Erntemaschine 10 zwischen der Arbeitsstellung und der Vorgewendestellung gemäß Fig. 2 genutzt. Gegebenenfalls dient dieser Knickzylinder 26 auch der Bodenanpassung und/oder Bodenentlastung der Arbeitseinheiten 20.

Bedingt durch die Anordnung der Arbeitseinheiten 20 am Abschnitt 11a des Rahmens oder Gestells 11, an welchem auch das Fahrwerk 16 angreift, sowie bedingt durch die Anordnung der Achse 27, um welche die beiden Abschnitte 11a, 11b über den Knickzylinder 26 zueinander verlagert werden können, wird gewährleistet, dass in dieser Vorgewendestellung die Arbeitseinheiten 20 in Längsrichtung oder Zugrichtung der Erntemaschine 10 gesehen von hinten nach vorne schräg ansteigend verlaufen und einen Öffnungswinkel α gegenüber dem Untergrund einnehmen. Durch die erfindungsgemäße Anordnung der Knickachse 27 lassen sich Öffnungswinkel α von bis zu 15° (Winkelgraden) realisieren, wodurch die Zinken der Pickup 21 einen vorteilhaft großen Abstand zum Untergrund einnehmen, so dass nur eine geringe Gefahr besteht, einen bereits geformten Schwad auseinanderzuwerfen oder zu beschädigen.

Die Arbeitseinheiten 20 werden demnach ausgehend von der Arbeitsstellung der Fig. 1 in die Vorgewendestellung der Fig. 2 V-förmig angehoben. Dies erlaubt ein besonders sanftes Anheben und Aufsetzen der Arbeitseinheiten bei der Überführung zwischen der Arbeitsstellung und dieser Vorgewendestellung.

Vorzugsweise ist die Achse 18 des Fahrwerks 16 der landwirtschaftlichen Erntemaschine 10 als Lenkachse ausgeführt. Beim Überführen der landwirtschaftlichen Erntemaschine 10 ausgehend von der Arbeitsstellung in die, in Fig. 2 gezeigte, Vorgewendestellung und beim Anheben der Arbeitseinheiten 20 wird ein Nachlauf an der als Lenksachse ausgebildeten Achse 18 des Fahrwerks 16 erzeugt, der bei einer Kurvenfahrt die kurvenäußere Seite anhebt.

Zusätzlich wird beim Überführen der landwirtschaftlichen Erntemaschine 10 ausgehend von der Arbeitsstellung in die Vorgewendestellung der Fig. 2 der Achsabstand zwischen der Achse 18 des Fahrwerks 16 der landwirtschaftlichen Erntemaschine 10 und einer Hinterachse des Zugfahrzeugs verkürzt, wodurch die Wendigkeit erhöht wird.

### Bezugszeichenliste

- 10: Erntemaschine
- 11: Gestell/Rahmen
- 11a, 11b: Abschnitt
- 12: Längsträger
- 13: Deichsel
- 14: Ankoppelbock
- 15: Achse
- 16: Fahrwerk
- 17: Rad
- 18: Fahrwerkachse
- 19: Ausleger
- 19a: Mittelebene
- 20: Arbeitseinheit
- 21: Pickup
- 22: Bandfördersegment
- 23: Rollenniederhalter
- 24: Abdeckung
- 25: Kufe
- 26: Knickzylinder
- 27: Knickachse
- α: Öffnungswinkel

## Patentansprüche

1. Landwirtschaftliche Erntemaschine (10),
mit einem Rahmen oder einem Gestell (11), welches einen ersten Abschnitt (11a), an welchem ein Fahrwerk (16) angreift, und einen zweiten Abschnitt (11b), an welchem eine Deichsel (13) angreift, aufweist, wobei die beiden Abschnitte (11a, 11b) mit Hilfe eines Knickzylinders (26) um eine sich in Querrichtung der Erntemaschine (10) erstreckende Knickachse (27) relativ zueinander verlagerbar sind,
mit Auslegern (19), wobei zu beiden Seiten des Rahmens oder Gestells (11) jeweils mindestens ein Ausleger (19) an dem ersten Abschnitt (11a) des Rahmens oder Gestells (11), an welchem das Fahrwerk (16) angreift, derart angreift, dass zur Überführung der Erntemaschine (10) zwischen einer Arbeitsstellung, in welcher sich der jeweilige Ausleger (19) in Querrichtung der Erntemaschine (10) erstreckt, und einer Transportstellung, in welcher sich der jeweilige Ausleger (19) in Zugrichtung oder Längsrichtung der Erntemaschine (10) erstreckt, der jeweilige Ausleger (19) relativ zum ersten Abschnitt (11a) des Rahmens oder Gestells (11) verlagerbar ist,
mit Arbeitseinheiten (20), wobei an jedem der Ausleger (19) jeweils mindestens eine Arbeitseinheit (20) angreift, die zusammen mit dem jeweiligen Ausleger (19) verlagerbar sind,
wobei die sich in Querrichtung der Erntemaschine (10) erstreckende Knickachse (27), um welche der erste Abschnitt (11a) und der zweite Abschnitt (11b) des Rahmens oder Gestells (11) bei der Überführung der Erntemaschine (10) zwischen der Arbeitsstellung und einer Vorgewendestellung, in welcher sich der jeweilige Ausleger (19) ebenfalls in Querrichtung der Erntemaschine (10) erstreckt, durch Betätigen des Knickzylinders (26) relativ zueinander verlagerbar sind, in Zugrichtung oder Längsrichtung der Erntemaschine (10) gesehen derart angeordnet oder positioniert ist, sodass in dieser Vorgewendestellung die Arbeitseinheiten (20) in Zugrichtung oder Längsrichtung der Erntemaschine (10) gesehen von hinten nach vorne schräg ansteigend verlaufen.

2. Landwirtschaftliche Erntemaschine (10) nach Anspruch 1, **dadurch gekennzeichnet, dass** der Knickzylinder (26) in der Arbeitsstellung eingefahren und in der Vorgewendestellung ausgefahren ist.

3. Landwirtschaftliche Erntemaschine (10) nach Anspruch 1 oder 2, **dadurch gekennzeichnet, dass** die sich in Querrichtung der Erntemaschine (10) erstreckende Knickachse (27), um welche der erste Abschnitt (11a) und der zweite Abschnitt (11b) des Rahmens oder Gestells (11) bei der Überführung der Erntemaschine (10) zwischen der Arbeitsstellung und einer Vorgewendestellung relativ zueinander verlagerbar sind, in Zugrichtung oder Längsrichtung der Erntemaschine (10) gesehen etwa über einer Mittelebene (19a) der Ausleger (19) positioniert ist.

4. Landwirtschaftliche Erntemaschine (10) nach einem der Ansprüche 1 bis 3, **dadurch gekennzeichnet, dass** die sich in Querrichtung der Erntemaschine (10) erstreckende Knickachse (27) in Zugrichtung oder Längsrichtung der Erntemaschine (10) gesehen zwischen einer Schenkachse (15) zwischen der Deichsel (13) und einem Ankoppelbock (14) und einer Fahrwerksachse (18) des Fahrwerks (16) positioniert ist und sich zwischen der Schenkachse (15) und der Knickachse (27) ein Abstand x15 und zwischen der Knickachse (27) und der Fahrwerksachse (18) ein Abstand x18 einstellt, wobei die Knickachse (27) so angeordnet ist, dass das Verhältnis der Abstände x15:x18 zwischen 50:50 und 75:25 liegt..

5. Landwirtschaftliche Erntemaschine (10) nach einem der Ansprüche 1 bis 4, **dadurch gekennzeichnet, dass** die Fahrwerkachse (18) des Fahrwerks (16) lenkbar ist.

6. Landwirtschaftliche Erntemaschine (10) nach einem der Ansprüche 1 bis 5, **dadurch gekennzeichnet, dass** der Knickzylinder (26) eingerichtet ist, die beiden Abschnitte (11a, 11b) des Rahmens oder Gestells (11) auch für eine Bodenanpassung und/oder Bodenentlastung der Arbeitseinheiten (20) in der Arbeitsstellung der Erntemaschine (10) relativ zueinander zu verlagern.

7. Landwirtschaftliche Erntemaschine (10) nach einem der Ansprüche 1 bis 6, **dadurch gekennzeichnet, dass** dieselbe eine Futtererntemaschine ist.

8. Landwirtschaftliche Erntemaschine (10) nach Anspruch 7, **dadurch gekennzeichnet, dass** die Futtererntemaschine ein Merger oder Pickup-Band-Schwader ist, wobei an jedem der Ausleger (17) als Arbeitseinheit (20) eine Pickup (21) und ein Bandfördersegment (22) angreift.
